# EUROPEAN PATENT APPLICATION

(11) **EP 0 911 282 A1**
(43) Date of publication of application: **28.04.1999**
(21) Application number: 98440227.1
(22) Date of filing: 16.10.1998
(51) Int. Cl.: B65G 47/76

(54) **Device for conveying and sideways sorting box-like items**

(30) Priority: 21.10.1997 IT MI972364
(71) Applicant: ALCATEL, 75008 Paris (FR)
(72) Inventor: Passero, Adolfo, 81100 Caserta (IT); Reali, Lanfranco, 64010 Villa Lempa (Teramo) (IT)
(74) Representative: Schätzle, Albin, Dipl.-Phys.

(57) **Abstract**

A device is provided for conveying and sideways sorting box-like items along a closed loop path of the type including loading trays (1) wherein ejector means, provided at the sorting station, are apt to eject sideways the items (6) by exploiting their momentum transverse component. The ejector means consists of a plate-shaped diverter (3) hinged around a horizontal axis making an acute angle (X) with the main conveyance direction, and operable by an actuator cylinder (4) which, upon command rotates the diverter from the horizontal rest position (3a) to the vertical diverting position (3b). Advantageously, idle rollers (8) are provided on the side of diverter (3) in contact with the items to be diverted so as to transform the sliding friction into rolling friction.

## Description

The present invention relates to a device for conveying and sideways sorting box-like items. In particular it relates to a device for conveying and sideways sorting box-like items into containers located around a closed loop path of the type comprising at least one support anchored to a synchronous tow element capable of dragging it along the path through a loading station and at least one sorting station; a loading tray fixedly connected to said at least one support, on which the items to be transported from the loading station to the sorting station are loaded; and ejector means provided at each of said containers apt to eject, upon command, the items out of the tray.

In conventional systems for conveying and sorting items along a closed loop path, it is known that the items provided with codes containing identification and eventually other information, are loaded at the loading station, on tiltable trays travelling along the closed path defined by a rail guide passing through a read-out and recognition station for the items, where these codes are read out by suitable means arranged for the purpose, and one or more sorting stations, including containers into which the items, upon command coming from an electronic control system that controls the entire plant and capable of tilting laterally the trays are let to fall by gravity through energy damping chutes interposed between trays and containers.

The tilting trays carrying the items can be differently shaped and are connected to the support by means of various kind of mechanisms.

In U.S. 4,031,998 an automatic sorting conveyor system arranged for sorting items along a closed loop path in which each tiltable tray is composed essentially of plural sheets of slats disposed with their end portions being partially superimposed to one another, rigidly supported by supporting mechanisms and tiltable structures mounted to the conveyor chain is disclosed. The mechanisms are operated by respective solenoids whereby, when the carrier structure loaded with the item reaches the designated sorting station which the item is assigned to, a command coming from the control apparatus energizes the solenoid and through levers the supporting structures are tilted outwardly whereby the item slides down sideways onto a selected sorting chute, after which the unloaded carrier structure is moved to a location where it is reset.

In U.S. 4,832,204 a package handling and sorting system having a loop configuration, wherein each V-shaped tray is mounted on a carriage assembly attached to the conveyor chain is disclosed. An actuator device acts upon command, on one side of the V-shaped tray, pivoting it up from a substantial horizontal position to a tipped position, thus resulting in unloading of the item onto a chute.

All these known devices are generally complicated, heavy and noisy due to the presence of mechanisms for tilting trays, levers, etc.. Moreover they are slow and not very reliable since the unloading of the transported item occurs exclusively by gravity against the sliding friction, whereby there is the risk that the package is not unloaded at all or falls out of the receiving chute, and therefore the latter needs an enlarged inlet while the sorting rate is accordingly reduced.

An object of the present invention is, therefore, to provide a device for conveying and sideways sorting box-like items which, besides eliminating the disadvantages of the conventional devices, is cost-effective and capable of operating under severe environmental conditions.

This object is achieved by a device for conveying and sideways sorting box-like items which is characterized in that the advancing item to be sorted is intercepted by a plate-shaped diverter which is rotatable about an axis lying in a horizontal plane above the item feeding plane and making an acute angle with the main conveyance direction such as to create a momentum component transverse thereto, and in that actuator means are provided for rotating the diverter from a horizontal rest position to a vertical diverting position and vice versa.

The device according to the invention has the advantage that the actuator means are simplified and few in number since they depend on the number of outlets only and not on the number of trays that can be large.

Moreover, its reliability is increased since the item is unloaded from its tray in any case, and the sorting rate is increased as well.

Further features and advantages of the invention will become more apparent from the detailed description of a preferred, but not exclusive, embodiment of a device for conveying and sideways sorting box-like items given here below and taken in conjunction with the accompanying drawings attached merely by way of a non limiting example, in which:

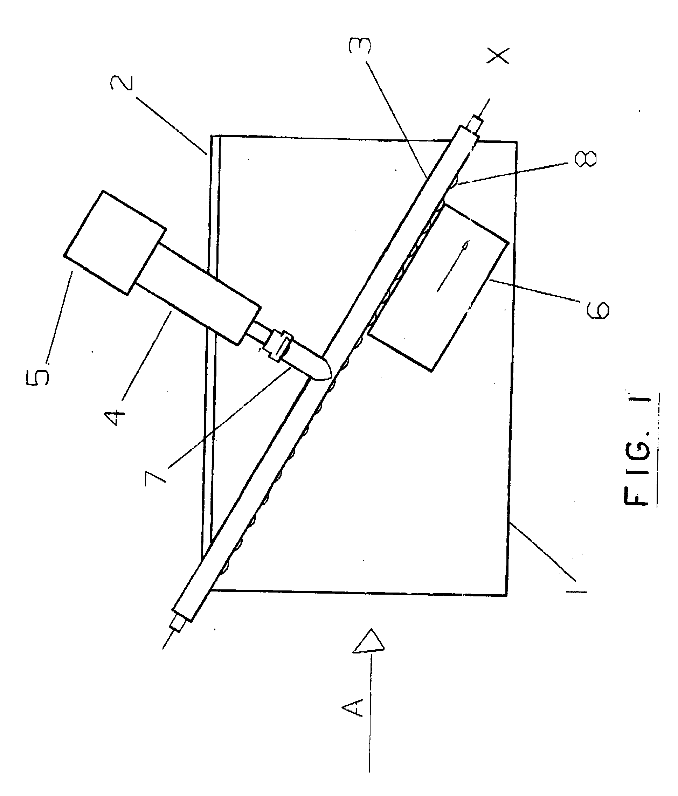

Fig. 1 is a diagrammatic and partial top plan view of the device according to the invention approaching a sorting station; and
Fig. 2 is a diagrammatic and partial perspective view of the device shown in Fig. 1, when it is unloading an item from the corresponding tray.

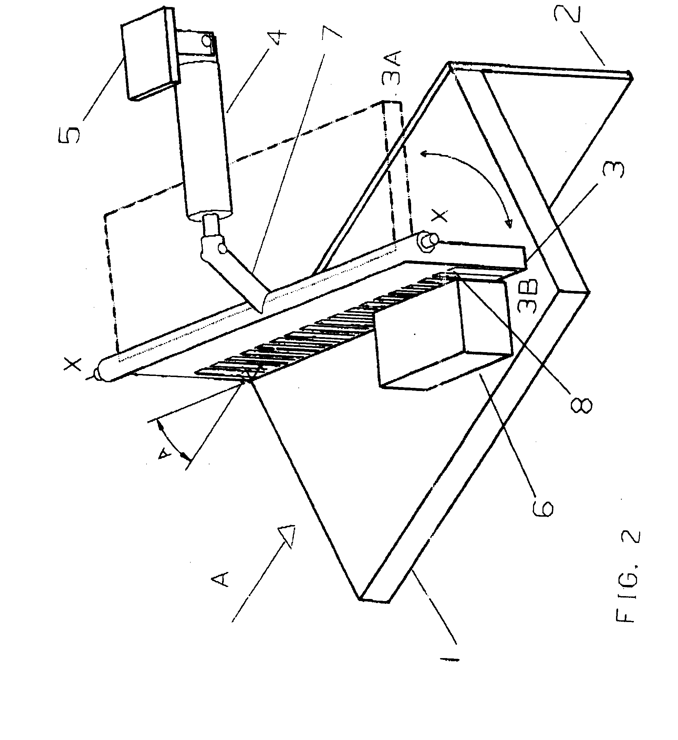

Referring now to the figures and in particular to Fig. 2, the conveying and sorting device according to the invention comprises a series of supports 2 anchored to a synchronous tow element of a synchronous conveyor system (chain and sprocket) which is not shown in the figures and not described since it is known per se and conventional.

Rigidly fixed to each support is a loading plate-shaped tray 1 arranged horizontally, on which the items 6 are loaded to be transported towards the sorting station which they are assigned to in order to be unloaded into respective containers.

Ejector means 3, 4, 5 located at each container are apt to eject, upon command, the item 6 out of the advancing tray 1 to unload it onto a chute inclined towards the containers.

In the illustrated embodiment, the ejector means consist of a plate-shaped diverter 3 arranged horizontally at an height greater than the item transit height. Diverter 3 is hinged at a longitudinal end thereof and the hinge axis X-X makes an acute angle α with the feed or main conveyance direction indicated by arrow A, i.e. the hinge axis X-X and the longitudinal axis of the tray are in different planes.

Preferably, said acute angle is of 30°.

Diverter 3 may take up two positions: a rest one (3A) where its largest side is disposed parallel to the tray plane, i.e. horizontally, and a diverting one (38) where its largest side is perpendicular to the tray plane, i.e. vertical. Switching from the rest position to the diverting position and vice versa is carried out by an actuator cylinder 4 having and end fixedly connected to a bearing 5 rigidly fixed to the frame structure and the other end connected with and operating lever 7 rigidly fixed to the hinged portion of the diverter 3.

Advantageously, located on the lower (in the rest position 3A) side of the diverter at the end remote from the hinge, are a plurality of idle rollers 8 whose axes are perpendicular to axis X-X of the hinge, which are adapted to touch the item 6 thus transforming the sliding friction between item and diverter into rolling friction.

The electronic control system, the bar code readers, the software for handling the sorting system are well known in the art and do not constitute an essential part of the present invention. Accordingly, they will neither illustrated nor described herein.

The operation of the device for conveying and sideways sorting box-like items
according to the present invention having the structure as described above, will now be described in short.

The bar-coded items to be sorted are loaded on the trays 1 at the loading station (not shown) of the plant and are carried up to the sorting station/s where collecting containers, which the items are assigned to, are located.

At a labelling station (also not shown) located along the closed loop path, the items are provided with a second code containing additional information such as, for instance, price, destination, date, etc..(when, for example, it is desired to make a practice of differentiated price from region to region).

These codes are read at a read-out station by suitable bar code scanners (also not shown) and the electronic control system, on the ground of the received information and of the loaded program, allots the containers into which the items are to be sorted and sends the suitable commands.

When a loaded tray is carried to a point adjacent to a container which the transported items is assigned to, an actuator cylinder 4, upon command from the electronic control system, is activated and by acting on lever 7 rotates the diverter 3 by 90° switching it from a horizontal rest position 3A to a vertical diverting position 3B.

The advancing item 6 strikes against diverter 3 whereby a transverse component of the item momentum is created and the item is accordingly ejected sideways (see Fig. 2) out of the tray 1. The presence of idle rollers 8 on the surface of the diverter facilitates the ejection.

A "positive" sorting system is thus obtained, that is to say an abrupt diversion without skidding.

Thus the invention fully achieves the object mentioned at the outset.

In fact, the device for conveying and sideways sorting box-like items according to the invention features a very simple structure since the trays are planar and have no complicate tilt mechanisms, while the ejector means is provided at the sorting outlets only and this, besides a remarkable cost reduction, leads also to a lightening of the conveyor structure.

This feature, along with the aforesaid "positive" sorting system exploiting the momentum transverse component of the item, makes the sorting device more reliable and speedy.

The increased reliability lies in that an item, which for any accidental reason, does not slide sideways on the tray, would be ejected out of the tray in any case, since the longitudinal component of its momentum would be neutralized by the diverter and the item would fall by gravity through the space interval between the tray and the following one.

Obviously, many modifications and variations of the invention are possible which, being apparent to those skilled in the art, all fall within the inventive concept.

For instance, by arranging the hinge axis X-X in a symmetric position with respect to the position illustrated in the figures, the diverting direction of the items is inverted and, if desired, it is possible to convey selectively in two transverse directions with respect to the main conveyance direction.

## Claims

1. Device for conveying and sideways sorting box-like items (6) into containers disposed along a closed loop path, said device comprising:
- at least one support (2) anchored to a synchronous towing element capable of dragging it along said path through a loading station and at least one sorting station where said containers are located;
- a loading tray (1) fixedly connected to said at least one support (2), on which items (6) are loaded to be transported from said loading station to said at least one sorting station;
- ejector means (3, 4, 5) located at said containers and apt to eject, upon command, the items (6) out of said tray, **characterized in that** said ejector means (3, 4, 5) consists of a plate-shaped diverter (3) hinged at one longer end, which is rotatable around an axis lying on a plane above the item feeding plane and making an acute angle (α) with the main conveyance direction (A) such as to create a transverse component of the item's momentum with respect to said main direction, and of actuating means (4) for rotating, upon command, said diverter from a rest position whereby the items (6) are advanced without being diverted to a working position whereby the items (6) are sideways ejected because of said transverse component.

2. Device according to claim 1, **characterized in that** said acute angle (α) is 30°.

3. Device according to claim 1, **characterized in that** said actuating means (4) comprises a fluid dynamic cylinder (4) engaged at one end with the fixed structure of the plant and acting on an operating lever (7) rigidly fixed to the hinged portion of said diverter (3).

4. Device according to claim 1, **characterized in that**, at the end remote from the rotation axis of said diverter (3), a plurality of idle rollers (8) are provided on the side contrasting the items (6) to be diverted , arranged with their axes perpendicular to said diverter rotation axis.
